# EUROPÄISCHE PATENTANMELDUNG

(11) **EP 4 843 645 A1**
(43) Veröffentlichungstag der Anmeldung: **25.11.2026**
(21) Anmeldenummer: 25178565.5
(22) Anmeldetag: 23.05.2025
(51) Int. Cl.: B01D 3/00

(54) **WÄRMEINTEGRATIONSNETZWERK FÜR CHEMISCHE PRODUKTIONSSTANDORTE**

(71) Anmelder: Evonik Oxeno GmbH & Co. KG, 45772 Marl (DE)
(72) Erfinder: PAUL, Niklas, 45570 Marl (DE); RIX, Armin Matthias, 45770 Marl (DE); SCHRÖDER, Moritz, 48153 Münster (DE); WESSNER, Lea, 44139 Dortmund (DE); ZAMPONI, Guido, 64823 Gross-Umstadt (DE); SCHALLENBERG, Jörg, 46286 Dorsten (DE)
(74) Vertreter: Evonik Patent Association

(57) **Zusammenfassung**

Gegenstand der Erfindung ist ein Verfahren zur energetischen Optimierung eines chemischen Produktionsstandorts mithilfe eines Wärmeintegrationsnetzwerks zur Erzeugung von Heizdampf. Das Verfahren umfasst das Einsammeln von Wärmeenergie in zwei unterschiedlichen Produktionsanlagen durch Übertragung auf einen Wärmeträger A. Mit dem Wärmeträger A wird dann ein Heizdampf erzeugt, der innerhalb des Produktionsstandorts eingesetzt werden kann.

## Beschreibung

Die vorliegende Erfindung betrifft ein Verfahren zur energetischen Optimierung eines chemischen Produktionsstandorts mithilfe eines Wärmeintegrationsnetzwerks zur Erzeugung von Heizdampf. Das Verfahren umfasst das Einsammeln von Wärmeenergie in zwei unterschiedlichen Produktionsanlagen durch Übertragung auf einen Wärmeträger A. Mit dem Wärmeträger A wird dann ein Heizdampf erzeugt, der innerhalb des Produktionsstandorts eingesetzt werden kann.

Die chemische Industrie ist einer der Industriezweige mit dem höchsten Energiebedarf. Große Mengen an Energie werden für die Herstellung der chemischen Erzeugnisse und insbesondere für die Aufreinigung der hergestellten chemischen Erzeugnisse, beispielsweise die Aufreinigung mittels Destillation aufgewendet. In Zeiten hoher Energiepreise ist der Betrieb von chemischen Produktionsanlagen bzw. gesamten Produktionsstandorten somit wirtschaftlich besonders aufwendig. Darüber hinaus wird die für die Herstellung von chemischen Erzeugnissen notwendige Energie häufig durch Heizdampf oder ein anderes Heizmedium bereitgestellt, bei dessen Erzeugung signifikante Mengen an CO₂ entstehen.

In den letzten Jahren wurden viele Elektrifizierungsmaßnahmen innerhalb einer Produktionsanlage erarbeitet, um Energie einzusparen und CO₂-Emissionen zu verringern. Mögliche Maßnahmen zur Einsparung von Energie und/oder Reduzierung von CO₂-Emissionen in einer Produktionsanlage sind die Brüdenverdichtung bei der Destillation oder der Einsatz von Wärmepumpen. Entsprechende Maßnahmen zur Elektrifizierung von chemischen Prozessen haben den Nachteil, dass sie oft mit recht hohen Investitionskosten (CAPEX) und einem großen Platzbedarf verbunden sind. So ist es insbesondere in bestehenden Anlagen herausfordernd, den Platz für einen zusätzlichen Verdichter, zusätzliche Wärmeträger, ein zusätzliches Schalthaus, zusätzliche Infrastruktur oder Ähnliches bereitzustellen. Ferner ist es für Produktionsanlagen mit vergleichsweise geringem Energiebedarf fast unmöglich ein wirtschaftliches Szenario für kostenintensive Apparate zu erarbeiten.

Die Aufgabe der vorliegenden Erfindung war deshalb die Bereitstellung eines Verfahrens, welches die vorher genannten Nachteile nicht aufweist. Es sollte insbesondere ein Verfahren erschlossen werden, bei dem die Investitionskosten und der Platzbedarf insgesamt geringer sind. Gleichzeitig sollte es möglich sein, auch Produktionsanlagen mit vergleichsweise geringem Energiebedarf einzubeziehen.

Diese Aufgabe wird durch das erfindungsgemäße Verfahren nach Anspruch 1 gelöst. Bevorzugte Ausführungsformen sind in den Unteransprüchen angegeben.

Das erfindungsgemäße Verfahren ist ein Verfahren zur energetischen Optimierung eines chemischen Produktionsstandorts mithilfe mindestens eines Wärmeintegrationsnetzwerks zur Erzeugung von Heizdampf,
wobei der chemische Produktionsstandort mindestens zwei unterschiedliche Produktionsanlagen und das mindestens eine Wärmeintegrationsnetzwerk mindestens einen Wärmeträger in jeder der vorhandenen Produktionsanlagen, in denen Wärmeenergie auf einen Wärmeträger A übertragen wird, und mindestens einen Verdichter umfasst;
wobei die auf den Wärmeträger übertragene Wärmeenergie an einer Stelle innerhalb einer Produktionsanlage anfällt und mithilfe eines Wärmeträgers abgenommen wird;
wobei mindestens eine der nachfolgenden Verfahrensvarianten a) oder b) angewendet wird:
   a) der Wärmeträger A durch die Energieübertragung in den Wärmeträgern in den vorhandenen Produktionsanlagen unter Erhalt des Wärmeträgers A1 erhitzt und/oder zumindest teilweise verdampft wird; der Wärmeträger A1 danach im Verdichter ein- oder mehrstufig verdichtet und anschließend als Heizmedium innerhalb des Produktionsstandorts eingesetzt wird;
      oder
   b) der Wärmeträger A durch die Energieübertragung in den Wärmeträgern in den vorhandenen Produktionsanlagen unter Erhalt des Wärmeträgers A1 erhitzt und/oder zumindest teilweise verdampft wird; der Wärmeträger A1 danach im Verdichter ein- oder mehrstufig verdichtet wird und anschließend Wärmeenergie in einem weiteren Wärmetauscher vom verdichteten Wärmeträger A1 auf einen Wärmeträger W übertragen, wobei der Wärmeträger W dadurch unter Erhalt eines Wärmeträgers W1 erhitzt und/oder zumindest teilweise verdampft wird und der Wärmeträger W1 danach mehrstufig verdichtet und anschließend als Heizmedium innerhalb des Produktionsstandorts eingesetzt wird.

Das erfindungsgemäße Verfahren hat den Vorteil, dass die Wärmeintegration, also die Nutzung von Abwärmen durch Aufwertung (Verdichtung) innerhalb eines Produktionsstandorts genutzt werden kann. Der Platzbedarf und die Investitionskosten werden im Vergleich zu Lösungen, wo nur einzelne Produktionsanlagen wärmeintegriert werden, verringert. Zudem können auch Produktionsanlagen innerhalb des Wärmeintegrationsnetzwerks berücksichtigt werden, bei denen sich eine intrinsische Wärmeintegration wegen eines geringen Energiebedarfs nicht lohnt.

Der Begriff chemischer Produktionsstandort meint im Rahmen der vorliegenden Erfindung einen Produktionsstandort, an dem chemische und/oder pharmazeutische und/oder biotechnologische Erzeugnisse oder Stoffe in entsprechenden Produktionsanlagen her- oder bereitgestellt werden. Darunter fallen erfindungsgemäße auch Standorte zur Produktion von Lebensmitteln oder Baustoffen. Beispiele für Produktionsstandorte in Deutschland sind Chemieparks wie der Chemiepark Marl, der Chempark Leverkusen oder der Produktionsstandort in Ludwigshafen oder allgemeiner Industrieparks wie der Industriepark Hoechst. International sind die Häfen von Antwerpen, Rotterdam und Le Havre, der Nanjing Chemical Industrial Park (NCIP) oder der Shanghai Chemical Industry Park (SCIP) bekannte Beispiele für große Produktionsstandorte.

Der Begriff Produktionsanlage oder chemische Produktionsanlage meint im Rahmen der vorliegenden Erfindung physische Einrichtungen, Komponenten oder ein System von Anlagen, die zur Herstellung oder Bereitstellung chemischer, pharmazeutischer oder biotechnologischer Produkte bzw. chemischer Stoffe eingesetzt werden. Der Begriff Produktionsanlage betrifft sowohl Anlagen, in denen Produkte bzw. Stoffe durch chemische Reaktion hergestellt werden, beispielsweise Anlagen zur Oligomerisierung, zur Polymerisierung, zur Hydroformylierung oder zur Hydrierung, als auch Anlagen, in denen chemische Stoffe durch Abtrennung bereitgestellt werden, beispielsweise die Extraktivdestillation von Butadien oder die destillative Abtrennung von 1-Buten. In einer Produktionsanlage wird im Rahmen der vorliegenden Erfindung immer mindestens ein Produkt oder ein Stoff erhalten, der entweder verkauft oder weiterverarbeitet werden kann.

Wenn auch keine chemische Produktionsanlage könnten Rechenzentren, die bekanntermaßen ebenfalls große Mengen an Abwärme erzeugen mit in das erfindungsgemäße Verfahren einbezogen werden. Die Abwärme des Rechenzentrums könnte ebenfalls mit einem Wärmeträger eingesammelt werden.

Der Begriff Wärmeintegrationsnetzwerk bezieht sich auf ein Netzwerk aus Wärmetauschern und mindestens eines Verdichters innerhalb eines chemischen Produktionsstandorts, bei dem Energie in Form von Wärmeenergie an verschiedenen Stellen, den Wärmequellen, des Produktionsstandorts über Wärmeträger eingesammelt, mittels mindestens einem Verdichter aufgewertet und an einer oder mehreren Stellen innerhalb des gleichen oder eines anderen Produktionsstandorts zur Beheizung bzw. Erwärmung eingesetzt wird. Möglich wäre auch ein teilweiser Einsatz als Fernwärme. Ein Wärmeintegrationsnetzwerk zeichnet sich weiterhin dadurch aus, dass mehrere Wärmequellen und Wärmesenken miteinander verschaltet werden, auch über mehrere verschiedene Wärmeträger.

Der chemische Produktionsstandort, in dem definitionsgemäß chemische und/oder pharmazeutische und/oder biotechnologische Erzeugnisse oder Stoffe produziert werden, weist erfindungsgemäß mindestens zwei unterschiedliche Produktionsanlagen auf. In einer bevorzugten Ausführungsform weist der chemische Produktionsstandort mindestens drei unterschiedliche Produktionsanlagen, besonders bevorzugt mindestens vier unterschiedliche Produktionsanlagen auf.

Es ist erfindungsgemäß mindestens ein Wärmeintegrationsnetzwerk vorhanden. Je nach Größe des chemischen Produktionsstandorts und der Möglichkeit unterschiedliche Abwärmen bzw. Abwärmemengen einzusammeln, kann es von Vorteil sein, wenn der chemische Produktionsstandort mehr als ein Wärmeintegrationsnetzwerk aufweist.

Das Wärmeintegrationsnetzwerk umfasst in jeder der vorhandenen Produktionsanlagen mindestens einen Wärmeträger. In den Wärmeträgern wird Energie in Form von Wärme dadurch eingesammelt, dass die Wärmeenergie auf einen Wärmeträger A übertragen wird. Einzelne Produktionsanlagen können auch mehr als einen Wärmetauscher umfassen, an denen Abwärmen abgenommen und auf den Wärmeträger A oder auf einen anderen Wärmeträger übertragen werden können, beispielsweise wenn weitere Wärmeintegrationsnetzwerke vorhanden sind.

Als die innerhalb des Wärmeintegrationsnetzwerks eingesetzten Wärmeträger können dem Fachmann bekannten Wärmeträger, beispielsweise Verdampfer, eingesetzt werden. Geeignete Verdampfer sind zum Beispiel Naturumlaufverdampfer, Zwangsumlaufverdampfer, Zwangsumlaufverdampfer mit Entspannung, Kesselverdampfer, Fallfilmverdampfer oder Dünnschichtverdampfer. Als Wärmeträger für den Verdampfer wird bei Naturumlaufverdampfern und Zwangsumlaufverdampfern üblicherweise ein Rohrbündel oder Plattenapparat eingesetzt. Neben den genannten kann aber auch jede beliebige andere, dem Fachmann bekannte Verdampferbauart eingesetzt werden. In allen genannten Typen können strukturierten Wärmeträgerrohre eingesetzt werden.

Im Rahmen der vorliegenden Erfindung können auch Verdampfer eingesetzt werden, die strukturierte Wärmeträgerrohre mit mindestens einem strukturierten Bereich umfassen.

Strukturierte Wärmeträgerrohre im Rahmen der vorliegenden Erfindung sind als Rohre zu verstehen, die mindestens einen strukturierten Bereich umfassen. Ein strukturierter Bereich zeichnet sich dabei durch ein wiederkehrendes Muster aus. Beispiele dafür sind Rippen bzw. Kanäle. Entsprechende Rohre sind dem Fachmann beispielsweise aus der EP 1 312 885 A2, der EP 1 830 151 A1, der WO 2017/207091 A1 oder der WO 2022/106045 A1 bekannt.

Die strukturierten Wärmeträgerrohre weisen vorzugsweise mehr als einen, also mehrere strukturierte Bereiche auf. Sofern mehrere strukturierte Bereiche vorliegen, ist es bevorzugt, dass die strukturierten Wärmeträgerrohre die strukturierten Bereiche auf der Rohrinnen- und/oder Rohraußenseite aufweisen. Bevorzugt ist sowohl auf der Rohrinnen- als auch der Rohraußenseite mindestens ein strukturierter Bereich vorhanden. In einer besonders bevorzugten Ausführungsform der vorliegenden Erfindung umfassen die strukturierten Bereiche kontinuierlich oder diskontinuierlich verlaufende achsparallele oder helixförmig umlaufende Rippen. Möglich sind auch Oberflächenstrukturen, die als re-entrant surfaces bezeichnet werden. Beispiele für solche Wärmeträgerrohre mit re-entrant surfaces werden von der Firma Wieland unter dem Produktnamen GEWA-B vertrieben.

Die strukturierten Wärmeträgerrohre haben den Vorteil, dass der Wärmeübergang zwischen den Medien im Wärmeträger verbessert wird. Der verbesserte Wärmeübergang sorgt zum einen dafür, dass man eine niedrige Temperaturdifferenz realisieren kann und zum anderen, dass dadurch mit strukturierten Rohren bestückte Wärmeträger im Vergleich zu Apparaten mit Standardrohren kleiner ausgeführt werden. Der Einsatz strukturierter Wärmeträgerrohre hat dadurch auch den Vorteil, dass Verdichterleistung und damit elektrische Energie (Stromkosten) eingespart werden kann. Die strukturierten Bereiche bewirken einen verbesserten Wärmeaustausch zwischen den Medien in den Verdampfern.

Das Wärmeintegrationsnetzwerk umfasst weiterhin mindestens einen Verdichter, mit dem der oder die Wärmeträger teilweise oder vollständig verdichtet werden. Der verdichtete Wärmeträger weist einen höheren Druck auf als der Wärmeträger vor der Verdichtung. Durch das Verdichten kann sich durch den Zusammenhang von Druck und Temperatur auch die Temperatur des Wärmeträgers erhöhen.

Das Verdichten des oder der Wärmeträger kann auf jede beliebige, dem Fachmann bekannte Art erfolgen. So kann die Verdichtung zum Beispiel mechanisch und einstufig oder mehrstufig durchgeführt werden. Einstufig bedeutet in diesem Zusammenhang, dass eine Verdichtung von einem auf ein anderes Druckniveau stattfindet. Mehrstufig bedeutet, dass erst auf ein erstes Druckniveau und dann vom ersten Druckniveau auf ein zweites Druckniveau verdichtet wird. Bei einer mehrstufigen Verdichtung können mehrere Verdichter gleicher Bauart oder Verdichter unterschiedlicher Bauart eingesetzt werden. Eine mehrstufige Verdichtung kann mit einer oder mehreren Verdichtermaschinen erfolgen. Der Einsatz einer einstufigen Verdichtung oder einer mehrstufigen Verdichtung ist vom Verdichtungsverhältnis und somit davon abhängig, auf welchen Druck der oder die Wärmeträger verdichtet werden soll.

Sofern eine mehrstufige Verdichtung vorliegt, kann eine Zwischeneindüsung des Wärmeträgers erfolgen. Diese Zwischeneindüsung von flüssigem Wärmeträger erfolgt grundsätzlich nach einer Verdichterstufe. In einer bevorzugten Ausführungsform erfolgt die Zwischeneindüsung von flüssigem Wärmeträger nach mindestens einer der vorhandenen Verdichterstufen. besonders bevorzugt nach allen vorhandenen Verdichterstufen. Durch die Zwischeneindüsung kann die Überhitzung nach der Verdichterstufe reduziert werden, um den zu verdichtenden Volumenstrom und damit die Verdichterleistung zu verringern. Der flüssige Wärmeträger wird zweckmäßigerweise aus kondensierten Wärmeträger-Rücklauf einer hohen Druckstufe entnommen.

Als Verdichter im erfindungsgemäßen Verfahren, insbesondere zum Verdichten des oder der Wärmeträger, eignet sich jeder beliebige, dem Fachmann bekannte Verdichter, bevorzugt mechanische Verdichter, mit dem sich Gasströme verdichten lassen. Geeignete Verdichter sind zum Beispiel ein- oder mehrstufige Getriebeturboverdichter, Kolbenverdichter, Schraubenverdichter, Zentrifugalverdichter oder Axialverdichter. Möglich ist auch der Einsatz von Gebläsen als Verdichter, die im Unterschied zu Verdichtern geringere Druckerhöhungen ermöglichen, was in bestimmen Fällen jedoch ausreichend sein kann.

Im Rahmen der vorliegenden Erfindung weist der chemische Produktionsstandort mindestens zwei unterschiedliche Produktionsanlagen auf. Jede erfindungsgemäße Produktionsanlage umfasst mindestens einen Wärmeträger, von dem Energie auf den Wärmeträger A übertragen wird. Eine erfindungsgemäße Produktionsanlage umfasst vorzugsweise mindestens eine Destillationskolonne oder mindestens einen Reaktor. Dort wird an geeigneten Wärmetauschern die Energie abgenommen.

Die auf den Wärmeträger A übertragene Wärmeenergie ist Abwärme aus den vorhandenen Produktionsanlagen. Die auf den Wärmeträger A übertragene Wärmeenergie ist Wärmeenergie, die an einer Stelle innerhalb einer Produktionsanlage anfällt und mithilfe eines Wärmeträgers abgenommen wird, insbesondere durch Kühlen einer Wärmequelle. Beispiele dafür sind die Reaktionswärme, die während bei einer exothermen Reaktion anfällt, Adsorptionswärme, die während einer Adsorption anfällt, Absorptionswärme, die während einer Absorption anfällt, Kristallisationswärme, die während einer Kristallisation anfällt, oder Kondensationswärme, die bei der zumindest teilweisen Kondensation, beispielsweise eines Brüden bei einer Destillation, anfällt, oder die durch die auf den Wärmeträger übertragene Wärmeenergie, die beim Kühlen von gasförmigen oder flüssigen Stoffströmen innerhalb einer Produktionsanlage anfällt. Weiterhin kann auch bei der Mischung oder der Dissoziation Energie frei werden, die als Abwärme eingesammelt werden kann.

Die Reaktionswärme von exothermen Reaktionen kann über dem Fachmann bekannte Techniken abgenommen werden, beispielsweise durch das Kühlen des Reaktors und/oder durch das Kühlen, des Reaktionsprodukts. Dies kann beispielsweise entweder direkt durch im / am Reaktor verbaute Wärmeübertragungsflächen oder in außenliegenden Wärmeträgern mit anschließender Rezirkulation des gekühlten Produkts erfolgen. Gleiches gilt auch für die Adsorption oder die Absorption, wo die Wärmeenergie durch Kühlen der Anlage oder durch Kühlen des erhaltenen Stroms abgenommen werden kann. Die Kondensationswärme wird durch das Kühlen von zumindest teilweise in dampf- oder gasförmiger Form vorliegenden Strömen abgenommen. Die wichtigsten Beispiele sind die Kondensation des Brüden bei der Destillation und die Kondensation von Produktströmen aus einer chemischen Reaktion.

Jede Produktionsanlage kann unabhängig voneinander aus einer 1-Buten-Abtrennung, einer Butadienabtrennung, einer Oligomerisierung inklusive Produktaufreinigung, einer Hydroformylierung oder Alkoxycarbonylierung inklusive Produktaufreinigung, einer Hydrierung von Aldehyden zu Alkoholen inklusive Produktaufreinigung, einer Kernhydrierung von Benzolpolycarbonsäureestern, einer MTBE-Synthese inklusive Produktaufreinigung, einer MTBE-Spaltung inklusive Produktaufreinigung, einer Selektivhydrierung von Dienen oder Acetylenen oder einer Totalhydrierung von Olefinen ausgewählt werden.

Eine 1-Buten-Abtrennung betrifft die Abtrennung von 1-Buten aus C4-Kohlenwasserstoffströmen. Die Abtrennung kann in einer Destillationseinheit, die mindestens zwei Destillationskolonnen umfasst, erfolgen. In der ersten Destillationskolonne werden Isobutan und 1-Buten am Kopf anfallen und zur zweiten Destillationskolonne geleitet. In der zweiten Destillationskolonne werden dann Isobutan und 1-Buten voneinander getrennt. Ein solches Verfahren wird beispielsweise in der DE 10 2005 062 700 A1 offenbart. Wärmeenergie, die bei einer 1-Buten-Abtrennung eingesammelt werden kann, ist vor allem die Kondensationswärme, die bei der Kondensation der Brüden in den Destillationskolonnen anfällt.

Eine Butadienabtrennung betrifft die Abtrennung von Butadien aus C4-Kohlenwasserstoffströmen. Diese Abtrennung erfolgt häufig extraktiv, d. h. unter Verwendung eines Extraktionsmittels wie N-Methyl-2-Pyrrolidon (NMP). Wärmeenergie, die bei einer Butadien-Abtrennung eingesammelt werden kann, ist Absorptionswärme, die bei der exothermen Absorption von Butadien in das Extraktionsmittel anfällt, und/oder Kondensationswärme, die bei der Kondensation der Brüden in den Destillationskolonnen oder Wärme, die bei der Abkühlung des regenerierten Lösungsmittelgemisches anfällt.

Eine Oligomerisierung ist eine Reaktion, mit der kürzerkettige Olefine zu längerkettigen Molekülen umgesetzt werden. Ein Beispiel ist die Umsetzung von C3- oder C4-Olefinen zu C6- oder C8-Olefinen. Die Oligomerisierung kann grundsätzlich homogen oder heterogen katalysiert werden. Ein Beispiel einer heterogen katalysierten Oligomerisierung findet sich in EP 3 782 970 A1. Wärmeenergie, die bei einer Oligomerisierung eingesammelt werden kann, ist Reaktionswärme, die bei der exothermen Oligomerisierung anfällt, und/oder Kondensationswärme, die in der Produktaufreinigung bei der Kondensation der Brüden in der oder den Destillationskolonnen anfällt.

Eine Hydroformylierung ist eine Reaktion, bei der Olefine mit Synthesegas zu Aldehyden umgesetzt werden. Eine Variante davon ist die Alkoxycarbonylierung, bei der Olefine mit Kohlenmonoxid und Alkoholen zu Estern umgesetzt werden. Beide Reaktionstypen werden üblicherweise homogen katalysiert durchgeführt. In der Hydroformylierung gibt es Bestrebungen zu Heterogenisierung des Katalysatorsystems auf geeigneten Trägermaterialien wie SiC. Wärmeenergie, die bei einer Hydroformylierung oder Alkoxycarbonylierung eingesammelt werden kann, ist Reaktionswärme, die bei der exothermen Hydroformylierung oder Alkoxycarbonylierung anfällt, und/oder Kondensationswärme, die in der Produktaufreinigung bei der Kondensation der Brüden in der oder den Destillationskolonnen anfällt.

Eine Hydrierung ist die Anlagerung von Wasserstoff. Beispiele sind die Hydrierung von beispielsweise bei der Hydroformylierung hergestellten Aldehyden zu Alkoholen, die Kernhydrierung von Benzolpolycarbonsäureestern zu entsprechenden Cyclohexanpolycarbonsäureestern, die Totalhydrierung von Olefinen und die Selektivhydrierung von Dienen oder Acetylenen in Kohlenwasserstoffströmen, die Olefine enthalten. Wärmeenergie, die bei einer Hydrierung eingesammelt werden kann, ist Reaktionswärme, die bei der exothermen Hydrierung anfällt, und/oder Kondensationswärme, die in der Produktaufreinigung bei der Kondensation der Brüden in der oder den Destillationskolonnen anfällt.

Eine MTBE-Synthese betrifft eine Reaktion, bei der Isobuten mit Methanol zu Methyl-tert.-butyl-ether (MTBE) umgesetzt wird. Das ist eine wichtige Reaktion um Isobuten aus C4-Kohlenwasserstoffströmen zu entfernen. Die entgegengesetzte Reaktion ist die MTBE-Spaltung, bei der MTBE in Isobuten und Methanol gespalten wird. Dadurch kann hochreines Isobuten erzeugt werden. Wärmeenergie, die bei einer MTBE-Synthese oder der MTBE-Spaltung eingesammelt werden kann, ist Reaktionswärme, die bei der MTBE-Synthese anfällt, und/oder Kondensationswärme, die in der Produktaufreinigung bei der Kondensation der Brüden in der oder den Destillationskolonnen anfällt.

Es versteht sich, dass die genannten Produktionsanlagen nur Beispiele sind und jedwede sonstige Produktionsanlage, in der chemische und/oder pharmazeutische und/oder biotechnologische Erzeugnisse oder Stoffe her- oder bereitgestellt werden, eingesetzt werden kann.

Der im erfindungsgemäßen Verfahren eingesetzte Wärmeträger A kann grundsätzlich jeder Wärmeträger sein, mit dem die jeweilige Aufnahme an Energie in dem entsprechenden Wärmeträger möglich ist. Der Wärmeträger A kann deshalb ganz allgemein aus der Gruppe, bestehend aus Wasser; Alkoholen; Alkohol-Wasser-Mischungen; Salz-Wasser-Lösungen; Ammoniak; Mineralöle, wie zum Beispiel Dieselöle; Thermalölen, wie zum Beispiel Silikonöle; biologische Ölen, wie zum Beispiel Limonen; und aromatischen oder aliphatischen Kohlenwasserstoffen, wie zum Beispiel Dibenzyltoluol ausgewählt werden. Der Wärmeträger A ist vorzugsweise Wasser, Methanol, Ethanol, Propanol, n-Pentan, n-Butan, n-Hexan, n-Propan oder Ammoniak.

Das vorliegende Verfahren betrifft zwei unterschiedliche Verfahrensvarianten a) oder b).

### Variante a)

Die Variante a) betrifft eine Verfahrensführung, bei der der Wärmeträger A durch die Energieübertragung in den Wärmeträgern in den vorhandenen Produktionsanlagen unter Erhalt des Wärmeträgers A1 erhitzt und/oder zumindest teilweise verdampft wird; der Wärmeträger A1 danach im Verdichter ein- oder mehrstufig verdichtet und anschließend als Heizmedium innerhalb des Produktionsstandorts eingesetzt wird. Der Wärmeträger wird hier auch gleichzeitig nach der Aufwertung durch die Verdichtung als Heizmedium eingesetzt.

Der Wärmeträger A kann in der Variante a) aus der oben genannten Liste von möglichen Wärmeträgern ausgewählt werden. In einer bevorzugten Ausführungsform der vorliegenden Erfindung ist der Wärmeträger A in der Variante a) Wasser und es wird ein Heizdampf erzeugt. Der Wärmeträger A wird dann durch die Energieübertragung auf den Wärmeträger A unter Erhalt des Wärmeträgers A1 erhitzt und/oder zumindest teilweise verdampft. Danach wird der Wärmeträger A1 ein- oder mehrstufig verdichtet und anschließend als Heizdampf innerhalb des Produktionsstandorts eingesetzt.

Die Übertragung von Energie auf Wasser als Wärmeträger A kann nach dem Fachmann bekannten Verfahren oder mit den Fachmann bekannten Wärmeträgern, beispielsweise den bereits erwähnten Verdampfern, durchgeführt werden. Geeignete Verdampfer sind zum Beispiel Naturumlaufverdampfer, Zwangsumlaufverdampfer, Zwangsumlaufverdampfer mit Entspannung, Kesselverdampfer, Fallfilmverdampfer oder Dünnschichtverdampfer. Als Wärmeträger für den Verdampfer wird bei Naturumlaufverdampfern und Zwangsumlaufverdampfern üblicherweise ein Rohrbündel oder Plattenapparat eingesetzt. Neben den genannten kann aber auch jede beliebige andere, dem Fachmann bekannte Verdampferbauart eingesetzt werden. In allen genannten Typen können die strukturierten Wärmeträgerrohre eingesetzt werden.

Im Rahmen der vorliegenden Erfindung können auch Verdampfer eingesetzt werden, die strukturierte Wärmeträgerrohre mit mindestens einem strukturierten Bereich umfassen.

Strukturierte Wärmeträgerrohre im Rahmen der vorliegenden Erfindung sind als Rohre zu verstehen, die mindestens einen strukturierten Bereich umfassen. Ein strukturierter Bereich zeichnet sich dabei durch ein wiederkehrendes Muster aus. Beispiele dafür sind Rippen bzw. Kanäle. Entsprechende Rohre sind dem Fachmann beispielsweise aus der EP 1 312 885 A2, der EP 1 830 151 A1, der WO 2017/207091 A1 oder der WO 2022/106045 A1 bekannt.

Die strukturierten Wärmeträgerrohre weisen vorzugsweise mehr als einen, also mehrere strukturierte Bereiche auf. Sofern mehrere strukturierte Bereiche vorliegen, ist es bevorzugt, dass die strukturierten Wärmeträgerrohre die strukturierten Bereiche auf der Rohrinnen- und/oder Rohraußenseite aufweisen. Bevorzugt ist sowohl auf der Rohrinnen- als auch der Rohraußenseite mindestens ein strukturierter Bereich vorhanden. In einer besonders bevorzugten Ausführungsform der vorliegenden Erfindung umfassen die strukturierten Bereiche kontinuierlich oder diskontinuierlich verlaufende achsparallele oder helixförmig umlaufende Rippen. Möglich sind auch Oberflächenstrukturen, die als re-entrant surfaces bezeichnet werden. Beispiele für solche Wärmeträgerrohre mit re-entrant surfaces werden von der Firma Wieland unter dem Produktnamen GEWA-B vertrieben.

Die strukturierten Wärmeträgerrohre haben den Vorteil, dass der Wärmeübergang zwischen den Medien im Wärmeträger verbessert wird. Der verbesserte Wärmeübergang sorgt zum einen dafür, dass man eine niedrige Temperaturdifferenz realisieren kann und zum anderen, dass dadurch mit strukturierten Rohren bestückte Wärmeträger im Vergleich zu Apparaten mit Standardrohren kleiner ausgeführt werden. Der Einsatz strukturierter Wärmeträgerrohre hat dadurch auch den Vorteil, dass Verdichterleistung und damit elektrische Energie (Stromkosten) eingespart werden kann. Die strukturierten Bereiche bewirken einen verbesserten Wärmeaustausch zwischen den Medien in den Verdampfern.

Nach der beschriebenen Energieübertragung auf Wasser als Wärmeträger A weist der Wärmeträger A1 gegenüber dem als Wärmeträger A, vorzugsweise dem als Wärmeträger A eingesetzten Wasser eine erhöhte Temperatur und optional einen erhöhten Druck auf. In einer bevorzugten Ausführungsform der vorliegenden Erfindung erfolgt die Energieübertragung auf den Wärmeträger A, vorzugsweise das als Wärmeträger A eingesetzte Wasser bei 75°C oder mehr, vorzugsweise bei 79 °C oder mehr. Die Energieübertragung auf das als Wärmeträger A eingesetzte Wasser erfolgt vorzugsweise im leichten Vakuum im Bereich von 100 bis 800 mbar, vorzugsweise 200 bis 700 mbar, besonders bevorzugt 250 bis 600 mbar.

In einer weiterhin bevorzugten Ausführungsform wird aus dem Wärmeträger A1, vorzugsweise dem als Wärmeträger A1 vorliegenden Wasser nach dem Verdampfen und vor der ein- oder mehrstufigen Verdichtung zunächst mit einem Gebläse ein Schlappdampf erzeugt, der einen Druck im Bereich von 1 bis 5 bar und eine Temperatur im Bereich von 100 bis 160 °C aufweist.

Der Wärmeträger A1, vorzugsweise das als Wärmeträger A1 vorliegende Wasser, wird anschließend ein- oder mehrfach verdichtet. Geeignete Verdichter für diese Verdichtung sind zum Beispiel ein- oder mehrstufige Getriebeturboverdichter, Kolbenverdichter, Schraubenverdichter, Zentrifugalverdichter oder Axialverdichter. Bevorzugt ist, wenn ein Getriebeturboverdichter, ein Kolbenverdichter oder ein Schraubenverdichter als Verdichter eingesetzt wird.

In einer weiteren bevorzugten Ausführungsform der vorliegenden Erfindung wird bei der mehrstufigen Verdichtung des Wärmeträgers A1, vorzugsweise des als Wärmeträger A1 vorliegenden Wassers ein Verdichter eingesetzt, der mindestens einen Seitenabzug aufweist, an dem ein Heizdampf einer anderen Druckstufe entnommen wird. Besonders bevorzugt ist es, wenn der Verdichter mindestens zwei Seitenabzüge aufweist, an denen jeweils Heizdämpfe unterschiedlicher Druckstufen entnommen werden. Typische Druckstufen von Heizdämpfen, die in Produktionsstandorten vorhanden sein können und damit erfindungsgemäß erzeugt werden können sind der Niederdruckdampf (Druck: 1 bis 6 bar, Temperatur: 110 bis 150 °C), der Mitteldruckdampf (Druck: 10 bis 30 bar, Temperatur: 160 bis 235 °C) und der Hochdruckdampf (Druck: 35 bis 90 bar, Temperatur: 250 bis 320 °C).

In einer bevorzugten Ausführungsform erfolgt bei der mehrstufigen Verdichtung des Wärmeträgers A1, vorzugsweise des als Wärmeträger A1 vorliegenden Wassers eine Zwischeneindüsung von flüssigem Wärmeträger, vorzugsweise Wasser. In einer bevorzugten Ausführungsform erfolgt die Zwischeneindüsung von flüssigem Wärmeträger nach mindestens einer der vorhandenen Verdichterstufen. besonders bevorzugt nach allen vorhandenen Verdichterstufen. Der flüssige Wärmeträger wird zweckmäßigerweise aus kondensierten Wärmeträger-Rücklauf einer hohen Druckstufe entnommen.

Der Wärmeträger A1 wird dann nach der Verdichtung in zumindest einer der im Produktionsstandort vorhandenen Produktionsanlagen als Heizmedium eingesetzt. Dadurch wird der Wärmeträger A1 zumindest teilweise kondensieren. Nach dem Einsatz als Heizmedium wird der Wärmeträger A1 vorzugsweise zu den jeweils vorliegenden Wärmeträgern zurückgeführt und fällt dort als Wärmeträger A an. Dort findet erneut eine Übertragung von Wärmeenergie auf den Wärmeträger A statt. Es handelt sich also vorzugsweise um einen Wärmeträgerkreislauf.

### Variante b)

Die Variante b) betrifft eine Verfahrensführung, bei der der Wärmeträger A durch die Energieübertragung in den Wärmeträgern in den vorhandenen Produktionsanlagen unter Erhalt des Wärmeträgers A1 erhitzt und zumindest teilweise verdampft wird; der Wärmeträger A1 danach im Verdichter ein- oder mehrstufig verdichtet wird und anschließend Wärmeenergie in einem weiteren Wärmetauscher vom verdichteten Wärmeträger A1 auf einen Wärmeträger W übertragen, wobei der Wärmeträger W dadurch unter Erhalt eines Wärmeträgers W1 erhitzt und/oder zumindest teilweise verdampft wird und der Wärmeträger W1 danach ein- oder mehrstufig verdichtet und anschließend als Heizmedium innerhalb des Produktionsstandorts eingesetzt wird.

Der Wärmeträger A für den Fall b) wird vorzugsweise aus der Gruppe, bestehend aus Alkoholen; Alkohol-Wasser-Mischungen; Salz-Wasser-Lösungen; Ammoniak; Mineralöle, wie zum Beispiel Dieselöle; Thermalölen, wie zum Beispiel Silikonöle; biologische Ölen, wie zum Beispiel Limonen; und aromatischen oder aliphatischen Kohlenwasserstoffen, wie zum Beispiel Dibenzyltoluol ausgewählt. Weiterhin bevorzugt ist der Wärmeträger A vorzugsweise Methanol, Ethanol, Propanol, n-Pentan, n-Butan, n-Hexan, n-Propan oder Ammoniak, besonders bevorzugt Methanol.

Die Übertragung von Energie auf den Wärmeträger A kann nach dem Fachmann bekannten Verfahren oder mit den Fachmann bekannten Wärmetauschern, beispielsweise den bereits erwähnten Verdampfern, durchgeführt werden. Geeignete Verdampfer zum Beispiel Naturumlaufverdampfer, Zwangsumlaufverdampfer, Zwangsumlaufverdampfer mit Entspannung, Kesselverdampfer, Fallfilmverdampfer oder Dünnschichtverdampfer. Als Wärmeträger für den Verdampfer wird bei Naturumlaufverdampfern und Zwangsumlaufverdampfern üblicherweise ein Rohrbündel oder Plattenapparat eingesetzt. Neben den genannten kann aber auch jede beliebige andere, dem Fachmann bekannte Verdampferbauart eingesetzt werden. In allen genannten Typen können die strukturierten Wärmeträgerrohre eingesetzt werden.

Im Rahmen der vorliegenden Erfindung können auch Verdampfer eingesetzt werden, die strukturierte Wärmeträgerrohre mit mindestens einem strukturierten Bereich umfassen.

Strukturierte Wärmeträgerrohre im Rahmen der vorliegenden Erfindung sind als Rohre zu verstehen, die mindestens einen strukturierten Bereich umfassen. Ein strukturierter Bereich zeichnet sich dabei durch ein wiederkehrendes Muster aus. Beispiele dafür sind Rippen bzw. Kanäle. Entsprechende Rohre sind dem Fachmann beispielsweise aus der EP 1 312 885 A2, der EP 1 830 151 A1, der WO 2017/207091 A1 oder der WO 2022/106045 A1 bekannt.

Die strukturierten Wärmeträgerrohre weisen vorzugsweise mehr als einen, also mehrere strukturierte Bereiche auf. Sofern mehrere strukturierte Bereiche vorliegen, ist es bevorzugt, dass die strukturierten Wärmeträgerrohre die strukturierten Bereiche auf der Rohrinnen- und/oder Rohraußenseite aufweisen. Bevorzugt ist sowohl auf der Rohrinnen- als auch der Rohraußenseite mindestens ein strukturierter Bereich vorhanden. In einer besonders bevorzugten Ausführungsform der vorliegenden Erfindung umfassen die strukturierten Bereiche kontinuierlich oder diskontinuierlich verlaufende achsparallele oder helixförmig umlaufende Rippen.

Die strukturierten Wärmeträgerrohre haben den Vorteil, dass der Wärmeübergang zwischen den Medien im Wärmeträger verbessert wird. Der verbesserte Wärmeübergang sorgt zum einen dafür, dass man eine niedrige Temperaturdifferenz realisieren kann und zum anderen, dass dadurch mit strukturierten Rohren bestückte Wärmeträger im Vergleich zu Apparaten mit Standardrohren kleiner ausgeführt werden. Der Einsatz strukturierter Wärmeträgerrohre hat dadurch auch den Vorteil, dass weitere Verdichterleistung und damit elektrische Energie (Stromkosten) eingespart werden kann. Die strukturierten Bereiche bewirken einen verbesserten Wärmeaustausch zwischen den Medien in den Sumpfverdampfern.

Nach der beschriebenen Energieübertragung auf den Wärmeträger A weist der Wärmeträger A1 gegenüber dem Wärmeträger A eine erhöhte Temperatur und optional einen erhöhten Druck auf, vorzugsweise ist die Temperatur > 100 °C. In einer bevorzugten Ausführungsform der vorliegenden Erfindung erfolgt die Energieübertragung auf das als Wärmeträger A eingesetzte Wasser bei größer 80 °C, besonders bevorzugt größer 100°C. Die Energieübertragung auf den Wärmeträger A erfolgt bei Temperaturen von mehr als 100 °C vorzugsweise im leichten Überdruck.. Ferner ist für eine Temperatur bei unter 100 °C eine Übertragung im leichten Unterdruck vorstellbar, beispielsweise in einem Druckbereich von 100 bis 800 mbar, vorzugsweise 200 bis 700 mbar, besonders bevorzugt 250 bis 600 mbar.

Der Wärmeträger W kann in der Variante b) aus der oben genannten Liste von möglichen Wärmeträger ausgewählt werden. In einer bevorzugten Ausführungsform der vorliegenden Erfindung ist der Wärmeträger W in der Variante a) Wasser und es wird ein Heizdampf erzeugt. Der Wärmeträger A wird dann durch die Energieübertragung in den Wärmeträgern in den vorhandenen Produktionsanlagen unter Erhalt des Wärmeträgers A1 erhitzt und/oder zumindest teilweise verdampft; der Wärmeträger A1wird danach im Verdichter ein- oder mehrstufig verdichtet und anschließend wird Wärmeenergie in einem weiteren Wärmetauscher vom verdichteten Wärmeträger A1 auf einen Wasserstrom W übertragen, wobei der Wasserstrom W dadurch unter Erhalt eines Wasserstroms W1 erhitzt und zumindest teilweise verdampft wird und/oder der Wasserstrom W1 anschließend ein- oder mehrstufig verdichtet und als Heizdampf innerhalb des Produktionsstandorts eingesetzt wird.

Nach der beschriebenen Energieübertragung auf Wasser als Wärmeträger W weist der Wärmeträger W1 gegenüber dem als Wärmeträger W eingesetzten Wasser eine erhöhte Temperatur und optional einen erhöhten Druck auf. In einer bevorzugten Ausführungsform der vorliegenden Erfindung erfolgt die Energieübertragung auf das als Wärmeträger W eingesetzte Wasser bei 75°C oder mehr, vorzugsweise bei 79 °C oder mehr. Die Energieübertragung auf das als Wärmeträger W eingesetzte Wasser erfolgt vorzugsweise im leichten Vakuum im Bereich von 100 bis 800 mbar, vorzugsweise 200 bis 700 mbar, besonders bevorzugt 250 bis 600 mbar.

In einer weiterhin bevorzugten Ausführungsform wird aus dem als Wärmeträger W1 vorliegenden Wasser nach dem Verdampfen und vor der ein- oder mehrstufigen Verdichtung zunächst mit einem Gebläse ein Schlappdampf erzeugt, der einen Druck im Bereich von 1 bis 5 bar und eine Temperatur im Bereich von 100 bis 160 °C aufweist.

Das als Wärmeträger W1 vorliegende Wasser wird ein- oder mehrfach verdichtet. Geeignete Verdichter für diese Verdichtung sind zum Beispiel ein- oder mehrstufige Getriebeturboverdichter, Kolbenverdichter, Schraubenverdichter, Zentrifugalverdichter oder Axialverdichter. Bevorzugt ist, wenn ein Getriebeturboverdichter, ein Kolbenverdichter oder ein Schraubenverdichter als Verdichter eingesetzt wird.

In einer weiteren bevorzugten Ausführungsform der vorliegenden Erfindung wird bei der mehrstufigen Verdichtung des als Wärmeträger W1 vorliegenden Wassers ein Verdichter eingesetzt, der mindestens einen Seitenabzug aufweist, an dem ein Heizdampf einer anderen Druckstufe entnommen wird. Besonders bevorzugt ist es, wenn der Verdichter mindestens zwei Seitenabzüge aufweist, an denen jeweils Heizdämpfe unterschiedlicher Druckstufen entnommen werden. Typische Druckstufen von Heizdämpfen, die in Produktionsstandorten vorhanden sein können und damit erfindungsgemäß erzeugt werden können sind der Niederdruckdampf (Druck: 1 bis 6 bar, Temperatur: 110 bis 150 °C), der Mitteldruckdampf (Druck: 10 bis 30 bar, Temperatur: 160 bis 235 °C) und der Hochdruckdampf (Druck: 35 bis 90 bar, Temperatur: 250 bis 320 °C).

In einer bevorzugten Ausführungsform erfolgt bei der mehrstufigen Verdichtung des Wärmeträgers W1, vorzugsweise des als Wärmeträger W1 vorliegenden Wassers eine Zwischeneindüsung von flüssigem Wärmeträger, vorzugsweise Wasser. In einer bevorzugten Ausführungsform erfolgt die Zwischeneindüsung von flüssigem Wärmeträger nach mindestens einer der vorhandenen Verdichterstufen. besonders bevorzugt nach allen vorhandenen Verdichterstufen. Der flüssige Wärmeträger wird zweckmäßigerweise aus kondensierten Wärmeträger-Rücklauf einer hohen Druckstufe entnommen.

Die vorliegende Erfindung wird anhand der nachfolgenden Zeichnung erläutert, die beispielhaften Charakter hat.

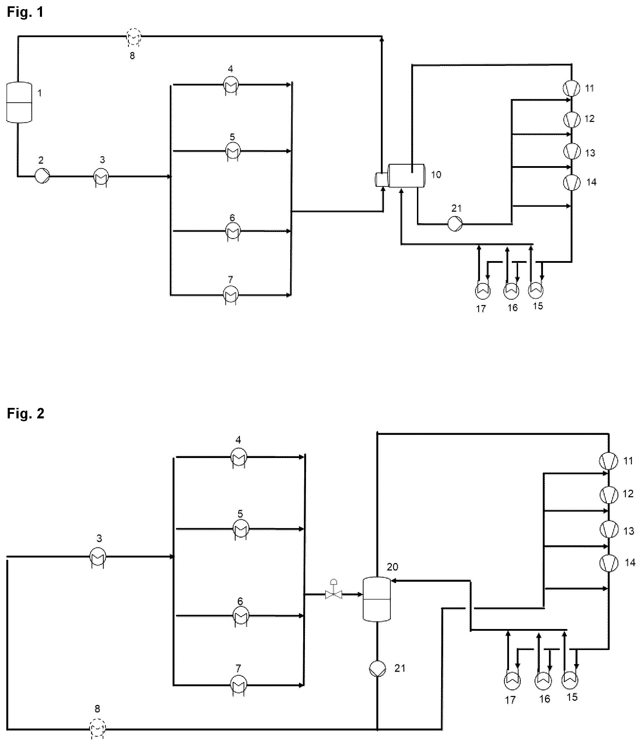

Fig. 1 zeigt eine Variante des erfindungsgemäßen Verfahrens erfindungsgemäße Verfahren. In einem Warmwasser-Kreislauf, der aus der Vorlage (1) gespeist wird, wird das Wasser zu verschiedenen Wärmequellen (Wärmeträger 3, 4, 5, 6, 7) gefahren und dort Energie eingesammelt. Die Wärme wird im Kettleverdampfer (10) genutzt, um Wasser zu verdampfen. Mit einem mehrstufigen Verdichter (Verdichterstufen 11, 12, 13 und 14) mit Zwischeneindüsung von Wasser über die Pumpe (21) verdichtet. Wasser- oder MeOH-Dampf überhitzt beim Verdichten. Dadurch sinkt seine Dichte, der zu verdichtende Volumenstrom und damit die Verdichterleistung steigen an. Durch die Zwischeneindüsung von flüssigem Wasser oder MeOH in jeder Stufe kann die Überhitzung und damit der Volumenstrom verringert werden. An den Wärmeträgern (15), (16) und (17) wird Heizleistung an unterschiedlichen Wärmeträgern zur Beheizung unterschiedlicher Wärmesenken in unterschiedlichen Produktionsanlagen eingesetzt. Wenn eine, mehrere oder alle Produktionsanlagen, die mit den Wärmeträgern (15), (16) und (17) beheizt werden, ausfallen oder heruntergefahren werden, könnte der Dampf entweder in ein Dampfnetz gespeist werden oder kein Dampf mehr erzeugt werden, da die Wärmeenergie des ersten Warmwasserkreislaufs im optionalen Wärmeträger (8) zur Beheizung einer anderen Produktionsanlage eingesetzt wird.
Fig. 2 zeigt eine weitere Ausführungsform des erfindungsgemäßen Verfahrens. Der Verdampfer (10) in Fig. 1 wird durch einen Flashbehälter (20) ersetzt. Demzufolge kann eine treibende Temperaturdifferenz eingespart werden und in dem Flashbehälter (20) wird Wasserdampf erzeugt. Daraus resultiert eine geringere Verdichterleistung, da der Wasserdampf von einem höheren Temperatur-/Druckniveau aufgewertet wird.

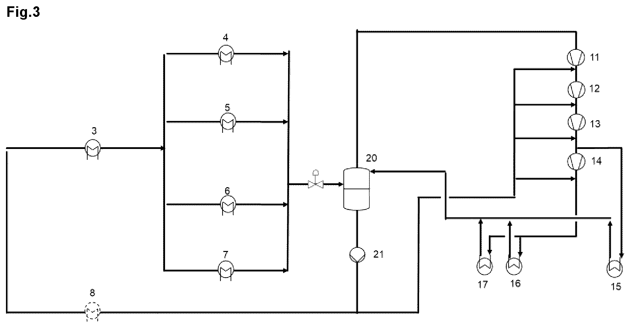

In Fig. 3 ist eine weitere Modifikation des erfindungsgemäßen Verfahrens dargestellt. Hier werden die Wärmesenken sortiert. Am Wärmeträger (15) reicht eine geringere Druckstufe aus, um ausreichend Energie zu übertragen. Der Dampf muss daher nicht noch durch die letzte Verdichterstufe (14), sondern kann vorher über einen Seitenabzug abgenommen werden. Durch den Seitenabzug vor der letzten Verdichterstufe (14) kann weitere Verdichterleistung eingespart werden.

### Beispiel

Die für den Betrieb, der in den Beispielen dargestellten Anlagen notwendige Menge an Energie zur Beschreibung des Wärmepumpennetzwerks wurde anhand von Simulationen mittels Aspen Plus V12 errechnet. Die Stoffdaten und das kinetische Modell wurden durch Betriebsdaten und Betriebsversuche validiert.

### Beispiel 1

Beispiel 1 wurde in einer Ausführungsform gemäß Fig. 1 simuliert. Das Wasser aus der Vorlage (1) wird mit einer Temperatur von 80°C mithilfe einer Kreislaufpumpe (2) in einer Menge von 150 t/h zu verschiedenen Wärmequellen (Wärmeträger 3, 4, 5, 6, 7) gefahren. Zunächst wird das Warmwasser über einen Wärmeträger (3) gefahren. Hier werden 800 kW Kondensationswärme einer Vakuumdestillation übertragen, bei der beispielsweise C8-Olefine von höheren Oligomeren getrennt werden. Die Kondensationswärme wird auf einem Temperaturniveau von 90°C übertragen und wärmt den Warmwasserkreislauf auf 84,5°C auf. In einem weiteren Schritt werden vier unterschiedliche Wärmequellen (Wärmeträger 4, 5, 6, 7) bei 105 bis 110°C eingesammelt. 1000 kW Kondensationswärme einer INA-Reinkolonne (Destillation von Isononanol (INA)) werden im Wärmeträger (4) übertragen. 500 kW Kondensationswärme einer Vakuumdestillation werden in Wärmeträger (5) übertragen, wobei bei der Vakuumdestillation C12-Olefine von höheren Oligomeren getrennt werden. 300 kW Reaktionswärme einer Tetrabutanhydrierung werden im Wärmeträger (6) auf den Warmwasserkreislauf übertragen. Wärmeträger (7) wird genutzt, um 500 kW Kondensationswärme einer TBA-Kolonne (Destillation zur Abtrennung von Tertiär-Butanol (TBA)) einzusammeln. In Summe wird der das Wasser im Warmwasserkreislauf um 3100 kW aufgeheizt und hat eine anschließend eine Temperatur von 98°C. Die Wärme wird im Kettleverdampfer (10) genutzt, um Wasser bei 75°C / 385 mbar zu verdampfen. Mit einem mehrstufigen Verdichter (Verdichterstufen 11, 12, 13 und 14) mit Zwischeneindüsung von Wasser wird der Wasserdampf auf 4 bar Dampf und 145°C verdichtet. Hierfür ist eine Verdichterleistung von 700 kW erforderlich. Insgesamt werden an den Wärmeträgern (15), (16) und (17) 3800 kW Heizleistung an unterschiedlichen Wärmeträgern eingesetzt. Es resultiert ein COP (Coefficient of Performance / deutsch: Arbeitszahl) von 5,4.

### Beispiel 2

Die Simulation von Beispiel 2 wurde mit dem erfindungsgemäßen Verfahren nach Fig. 2 durchgeführt, wo der Verdampfer (10) durch einen Flashbehälter (20) ersetzt worden ist. In dem Flashbehälter (20) wird Wasserdampf bei 80°C und bei 470 mbar erzeugt. Es werden im Vergleich mit der Ausführung in Beispiel 1 65 kW elektrische Leistung in den Verdichtern (11- 14) eingespart und es können insgesamt 3735 kW thermische Leistung an den Wärmeträgern (15), (16) und (17) übertragen werden. Es resultiert ein COP von 5,9.

### Beispiel 3

Die Simulation von Beispiel 3 wurde mit dem erfindungsgemäßen Verfahren nach Fig. 3 durchgeführt. Am Wärmeträger (15) reicht eine Druckstufe von 2 bar abs. aus, um 1550 kW an Energie zu übertragen. Der Dampf muss daher nicht noch durch die letzte Verdichterstufe (14), sondern kann vorher über einen Seitenabzug abgenommen werden. Durch den Seitenabzug vor der letzten Verdichterstufe (14) werden weitere 100 kW Verdichterleistung eingespart. An den Wärmeträgern (16) und (17) werden 2085 kW übertragen. Insgesamt werden 3635 kW übertragen. Hierfür ist eine Verdichterleistung von 535 kW erforderlich. Der COP steigt auf 6,8.

## Patentansprüche

1. Verfahren zur energetischen Optimierung eines chemischen Produktionsstandorts mithilfe mindestens eines Wärmeintegrationsnetzwerks zur Erzeugung von Heizdampf,
wobei der chemische Produktionsstandort mindestens zwei unterschiedliche Produktionsanlagen und das mindestens eine Wärmeintegrationsnetzwerk mindestens einen Wärmeträger in jeder der vorhandenen Produktionsanlagen, in denen Wärmeenergie auf einen Wärmeträger A übertragen wird, und mindestens einen Verdichter umfasst;
wobei die auf den Wärmeträger übertragene Wärmeenergie an einer Stelle innerhalb einer Produktionsanlage anfällt und mithilfe eines Wärmeträgers abgenommen wird;
wobei mindestens eine der nachfolgenden Verfahrensvarianten a) oder b) angewendet wird:
a) der Wärmeträger A durch die Energieübertragung in den Wärmeträgern in den vorhandenen Produktionsanlagen unter Erhalt des Wärmeträgers A1 erhitzt und/oder zumindest teilweise verdampft wird; der Wärmeträger A1 danach im Verdichter ein- oder mehrstufig verdichtet und anschließend als Heizmedium innerhalb des Produktionsstandorts eingesetzt wird;
oder
b) der Wärmeträger A durch die Energieübertragung in den Wärmeträgern in den vorhandenen Produktionsanlagen unter Erhalt des Wärmeträgers A1 erhitzt und/oder zumindest teilweise verdampft wird; der Wärmeträger A1 danach im Verdichter ein- oder mehrstufig verdichtet wird und anschließend Wärmeenergie in einem weiteren Wärmetauscher vom verdichteten Wärmeträger A1 auf einen Wärmeträger W übertragen, wobei der Wärmeträger W dadurch unter Erhalt des eines Wärmeträgers W1 erhitzt und/oder zumindest teilweise verdampft wird und der Wärmeträger W1 danach ein- oder mehrstufig verdichtet und anschließend als Heizmedium innerhalb des Produktionsstandorts eingesetzt wird.

2. Verfahren nach Anspruch 1, wobei eine Produktionsanlage mindestens eine Destillationskolonne und/oder mindestens einen Reaktor umfasst.

3. Verfahren nach Anspruch 1 oder 2, wobei eine Produktionsanlage eine 1-Buten-Abtrennung, eine Butadienabtrennung, eine Oligomerisierung inklusive Produktaufreinigung, eine Hydroformylierung inklusive Produktaufreinigung, eine Hydrierung von Aldehyden zu Alkoholen inklusive Produktaufreinigung, eine Kernhydrierung von Benzolpolycarbonsäureestern, eine MTBE-Synthese inklusive Produktaufreinigung, eine MTBE-Spaltung inklusive Produktaufreinigung, eine Selektivhydrierung von Dienen oder Acetylenen oder eine Totalhydrierung von Olefinen ist.

4. Verfahren nach einem der vorherigen Ansprüche, wobei im Fall a) der Wärmeträger A Wasser ist und Heizdampf als Heizmedium innerhalb des Produktionsstandorts eingesetzt wird.

5. Verfahren nach Anspruch 4, wobei für den Fall a) die Energieübertragung auf das Wasser bei 75°C oder mehr erfolgt, vorzugsweise im leichten Vakuum im Bereich von 100 bis 800 mbar, vorzugsweise 200 bis 700 mbar, besonders bevorzugt 250 bis 600 mbar.

6. Verfahren nach einem der Ansprüche 4 oder 5, wobei aus dem Wasser nach dem Verdampfen und vor der ein- oder mehrstufigen Verdichtung zunächst mit einem Gebläse ein Schlappdampf erzeugt wird, der einen Druck im Bereich von 1 bis 5 bar und eine Temperatur von 100 bis 160 °C aufweist.

7. Verfahren nach Anspruch 6, wobei bei der mehrstufigen Verdichtung des Wassers ein Verdichter eingesetzt wird, der mindestens einen Seitenabzug aufweist, an dem ein Heizdampf einer anderen Druckstufe entnommen wird.

8. Verfahren nach Anspruch 7, wobei der Verdichter mindestens zwei Seitenabzüge aufweist, an denen jeweils Heizdämpfe unterschiedlicher Druckstufen entnommen werden.

9. Verfahren nach Anspruch 6 oder 7, wobei ein Getriebeturboverdichter, ein Kolbenverdichter oder ein Schraubenverdichter als Verdichter eingesetzt wird.

10. Verfahren nach einem der vorherigen Ansprüche, wobei der Wärmeträger A für den Fall b) aus der Gruppe, bestehend aus Alkoholen; Alkohol-Wasser-Mischungen; Salz-Wasser-Lösungen; Ammoniak; Mineralöle, wie zum Beispiel Dieselöle; Thermalölen, wie zum Beispiel Silikonöle; biologische Ölen, wie zum Beispiel Limonen; und aromatischen oder aliphatischen Kohlenwasserstoffen, wie zum Beispiel Dibenzyltoluol ausgewählt wird, vorzugsweise Methanol, Ethanol, Propanol, n-Pentan, n-Butan, n-Hexan, n-Propan oder Ammoniak, besonders bevorzugt Methanol ist.

11. Verfahren nach einem der vorhergehenden Ansprüche, wobei die auf den Wärmeträger übertragene Wärmeenergie Reaktionswärme, die durch Kühlen bei einer exothermen Reaktion anfällt, Adsorptionswärme, die durch Kühlen bei einer Adsorption anfällt, Absorptionswärme, die durch Kühlen bei einer Absorption anfällt, Kristallisationswärme, die durch Kühlen bei einer Kristallisation anfällt, oder Kondensationswärme ist, die bei der zumindest teilweisen Kondensation, beispielsweise eines Brüden bei einer Destillation, anfällt, oder wobei die durch die auf den Wärmeträger übertragene Wärmeenergie beim Kühlen von Stoffströmen innerhalb einer Produktionsanlage anfällt.

12. Verfahren nach einem der vorherigen Ansprüche, wobei im Fall b) der Wärmeträger W Wasser ist und Heizdampf als Heizmedium innerhalb des Produktionsstandorts eingesetzt wird.

13. Verfahren nach Anspruch 12, wobei aus dem Wasserstrom nach dem Verdampfen und vor der ein- oder mehrstufigen Verdichtung zunächst mit einem Gebläse ein Schlappdampf erzeugt wird.

14. Verfahren nach Anspruch 13, wobei bei der mehrstufigen Verdichtung des Wasserstroms bzw. des Schlappdampfs ein Verdichter eingesetzt wird, der mindestens einen Seitenabzug aufweist, an dem ein Heizdampf einer anderen Druckstufe entnommen wird.

15. Verfahren nach Anspruch 14, wobei der Verdichter mindestens zwei Seitenabzüge aufweist, an denen jeweils Heizdämpfe unterschiedlicher Druckstufen entnommen werden.
